(19) Europäisches Patentamt
European Patent Office
Office européen des brevets

(11) EP 2 244 442 A1

(12) EUROPEAN PATENT APPLICATION

(43) Date of publication:
27.10.2010 Bulletin 2010/43

(51) Int Cl.:
H04L 29/08 (2006.01)   H04L 29/06 (2006.01)

(21) Application number: 10157165.1

(22) Date of filing: 22.03.2010

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA ME RS

(30) Priority: 24.04.2009  US 196728 P
01.05.2009  US 434561

(71) Applicant: Nokia Corporation
02150 Espoo (FI)

(72) Inventor: Reunamäki, Jukka Pekka
33820, Tampere (FI)

(74) Representative: Tognetty, Virpi Maria et al
Nokia Corporation
IPR Department
Keilalahdentie 4
02150 Espoo (FI)

(54) **Service discovery protocol enhancement**

(57)   A system for facilitating access to service-related information via a service discovery protocol (SDP) defined in an initial transport. The initial transport may be employed in establishing a link with at least one other apparatus. An SDP may then be utilized in order to determine the services that are available on the at least one other apparatus. Service information may further comprise information on complimentary transports that are usable with a service (e.g., transports in addition to the initial transport). If complimentary transports are available, a determination may be made amongst the available transports (e.g., initial and complimentary transports) as to which is more appropriate to employ when using the service.

**FIG. 8**

**Description**

**BACKGROUND OF INVENTION**

1. Field of Invention:

The present invention relates to systems for facilitating access to resources on at least one other apparatus, and in particular, to a system for discovering available services via an initial transport and any complimentary transports that may also be used to access the service.

2. Background:

Interaction via wireless communication has continued to proliferate due to substantial improvements in overall quality of service (QoS). At least some of these advances may be attributed to the continual revision of existing wireless protocols and the emergence of new wireless protocols. Moreover, these developments have lead to wireless protocols becoming more task-oriented. Wireless protocols are no longer designed to operate with the best possible performance in all categories. Instead, various wireless transports may have characteristics that tailor them for particular uses. For example, high capacity and speed wireless protocols may be well suited for the conveyance of large amounts of information, such as streaming of multimedia information. However, enhanced capacity may come at the cost of increased resource (power, processing, etc.) consumption. Therefore, other wireless transports may be more appropriate for general interaction between apparatuses. These transports may be designed with objectives such as conserving resources, improved security, limited error correction, etc. that may be beneficial to apparatuses that have inherent resource constraints (e.g., portable wireless devices).

In view of the above, it would follow logically that more conservative wireless transports should be employed by default in most wireless transactions. This would allow for a compromise between performance and resource consumption in scenarios where the amount of data being conveyed is reduced, and thus, quality is not as essential. However, difficulties may occur where information-related requirements change during the same interaction. This problem scenario becomes foreseeable as emerging wireless-enabled apparatuses are designed to handle various types of content (mail, audio, video, web interaction, etc.). While interaction using a less resource-intensive transport may generally be appropriate, the introduction of altered connection requirements may reduce, or even totally negate, any benefits due to the impact on performance.

**SUMMARY OF INVENTION**

Various example embodiments of the present invention are directed to facilitating access to service-related information via a service discovery protocol (SDP) defined in an initial transport. The initial transport may be employed in establishing a link with at least one other apparatus. An SDP may then be utilized in order to determine the services that are available on the at least one other apparatus. In accordance with at least one example embodiment of the present invention, the service information may further comprise information on complimentary transports that are usable with a service (e.g., transports in addition to the initial transport).

The information on complimentary transports may incorporated as part of the profile information corresponding to each service. For example, one or more attributes in the profile of each service may indicate other transports that may be utilized with the service. If at least one other complimentary transport is available, a determination may be made amongst the initial transport and the at least one other complimentary transports as to the most appropriate for use in subsequent transactions. The determination of the most appropriate transport may be based on operational requirements defined in view of the subsequent transactions, which may in some instances pertain to the activity that originally necessitated the link via the initial transport.

For example, wireless links may be established between apparatuses via an initial wireless transport in order to provide access to services amongst the apparatuses. After link establishment, the initial wireless transport may employ an SDP to locate desired (or required) services. Part of this process may comprise reading information associated with each service including, for example, service functionality, inputs, outputs, configuration, etc. However, in accordance with various example embodiments of the present invention the service discovery may also read service attributes reserved for identifying other transports (e.g., complimentary wireless transports) that can be utilized with each service. If no complimentary transports are identified, then the initial wireless transport may be used for any subsequent interaction. If complimentary transports are available, a further determination may be made as to the most appropriate transport to utilize based on, for example, the characteristics of the service access.

The above summarized configurations or operations of various embodiments of the present invention have been provided merely for the sake of explanation, and therefore, are not intended to be limiting. Moreover, inventive elements associated herein with a particular example embodiment of the present invention can be used interchangeably with other example embodiments depending, for example, on the manner in which an embodiment is implemented.

**DESCRIPTION OF DRAWINGS**

The invention will be further understood from the following detailed description of a preferred embodiment, taken in conjunction with appended drawings, in which:

FIG. 1 discloses examples of hardware and software resources that may be utilized when implementing various example embodiments of the present invention.

FIG. 2 discloses an example operational diagram including detail regarding a Bluetooth™ protocol stack in accordance with at least one embodiment of the present invention.

FIG. 3 discloses additional detail regarding the example Bluetooth™ profiles of FIG. 2 in accordance with at least one embodiment of the present invention.

FIG. 4 discloses an example Personal Area Network (PANU) service record in accordance with at least one embodiment of the present invention.

FIG. 5 discloses an example PANU service record including modified attributes in accordance with at least one embodiment of the present invention.

FIG. 6 discloses an alternative example PANU service record including modified attributes in accordance with at least one embodiment of the present invention.

FIG. 7 discloses another alternative example PANU service record including modified attributes in accordance with at least one embodiment of the present invention.

FIG. 8 discloses a flow chart for an example service access process in accordance with at least one embodiment of the present invention.

**DESCRIPTION OF PREFERRED EMBODIMENT**

While the present invention has been described herein in terms of a multitude of example embodiments, various changes or alterations can be made therein without departing from the spirit and scope of the present invention, as set forth in the appended claims.

I. General system with which embodiments of the present invention may be implemented

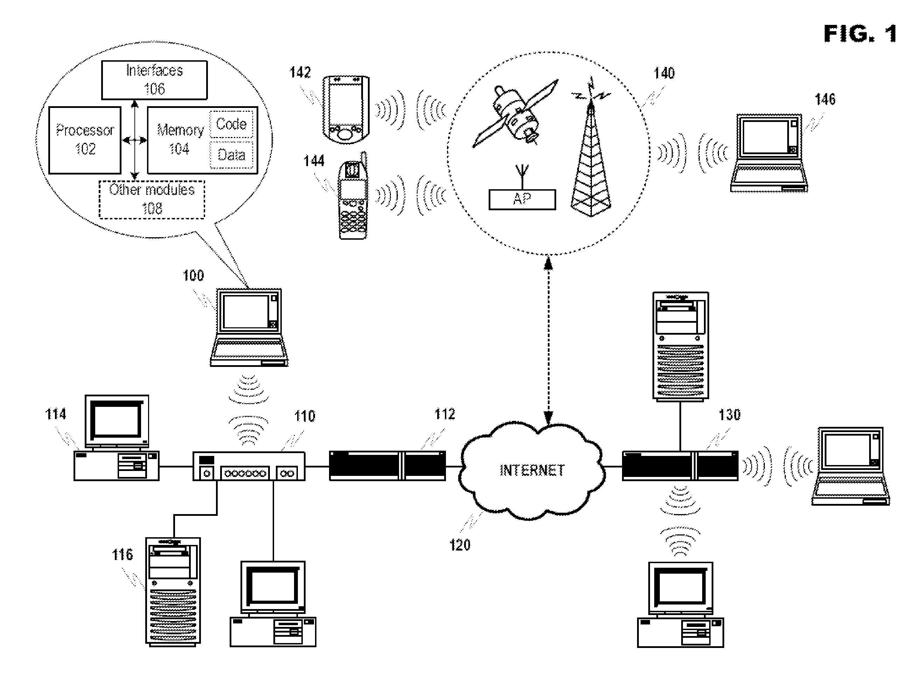

An example of a system that is usable for implementing various embodiments of the present invention is disclosed in FIG. 1. The system comprises elements that may be included in, or omitted from, configurations depending, for example, on the requirements of a particular application, and therefore, is not intended to limit present invention in any manner.

Computing device 100 may be, for example, a laptop computer. Elements that represent basic example components comprising functional elements in computing device 100 are disclosed at 102-108. Processor 102 may include one or more devices configured to execute instructions. In at least one scenario, the execution of program code (e.g., groups of computer-executable instructions stored in a memory) by processor 102 may cause computing device 100 to perform processes including, for example, method steps that may result in data, events or other output activities. Processor 102 may be a dedicated (e.g., monolithic) microprocessor device, or may be part of a composite device such as an ASIC, gate array, multi-chip module (MCM), etc.

Processor 102 may be electronically coupled to other functional components in computing device 100 via a wired or wireless bus. For example, processor 102 may access memory 102 in order to obtain stored information (e.g., program code, data, etc.) for use during processing. Memory 104 may generally include removable or imbedded memories that operate in a static or dynamic mode. Further, memory 104 may include read only memories (ROM), random access memories (RAM), and rewritable memories such as Flash, EPROM, etc. Code may include any interpreted or compiled computer language including computer-executable instructions. The code and/or data may be used to create software modules such as operating systems, communication utilities, user interfaces, more specialized program modules, etc.

One or more interfaces 106 may also be coupled to various components in computing device 100. These interfaces may allow for inter-apparatus communication (e.g., a software or protocol interface), apparatus-to-apparatus communication (e.g., a wired or wireless communication interface) and even apparatus to user communication (e.g., a user interface). These interfaces allow components within computing device 100, other apparatuses and users to interact with computing device 100. Further, interfaces 106 may communicate machine-readable data, such as electronic, magnetic or optical signals embodied on a computer readable medium, or may translate the actions of users into activity that may be understood by computing device 100 (e.g., typing on a keyboard, speaking into the receiver of a cellular handset, touching an icon on a touch screen device, etc.) Interfaces 106 may further allow processor 102 and/or memory 104 to interact with other modules 108. For example, other modules 108 may comprise one or more components supporting more specialized functionality provided by computing device 100.

Computing device 100 may interact with other apparatuses via various networks as further shown in FIG. 1. For example, hub 110 may provide wired and/or wireless support to devices such as computer 114 and server 116. Hub 110 may be further coupled to router 112 that allows devices on the local area network (LAN) to interact with devices on a wide area network (WAN, such as Internet 120). In such a scenario, another router 130 may transmit information to, and receive information from, router 112 so that devices on each LAN may communicate. Further, all of the components depicted in this example configuration are not necessary for implementation of the present invention. For example, in the LAN serviced by router 130 no additional hub is needed since this functionality may be supported by the router.

Further, interaction with remote devices may be supported by various providers of short and long range wireless communication 140. These providers may use, for example, long range terrestrial-based cellular systems and satellite communication, and/or short-range wireless access points in order to provide a wireless connection to Internet 120. For example, personal digital assistant (PDA) 142 and cellular handset 144 may communicate with computing device 100 via an Internet connection provided by a provider of wireless communication 140. Similar functionality may be included in devices, such as laptop computer 146, in the form of hardware and/or software resources configured to allow short and/or long range wireless communication.

II. Basic profiles for wireless communication

While Bluetooth™ structures and operation are referenced extensively in the following disclosure, implementation of the various embodiments of the present invention are not limited to operation with this particular communication transport. Bluetooth™ has been used merely for the sake of explanation herein, and is not intended to affect the scope of the present invention. Other wired/wireless communication transports may also be employed accordingly.

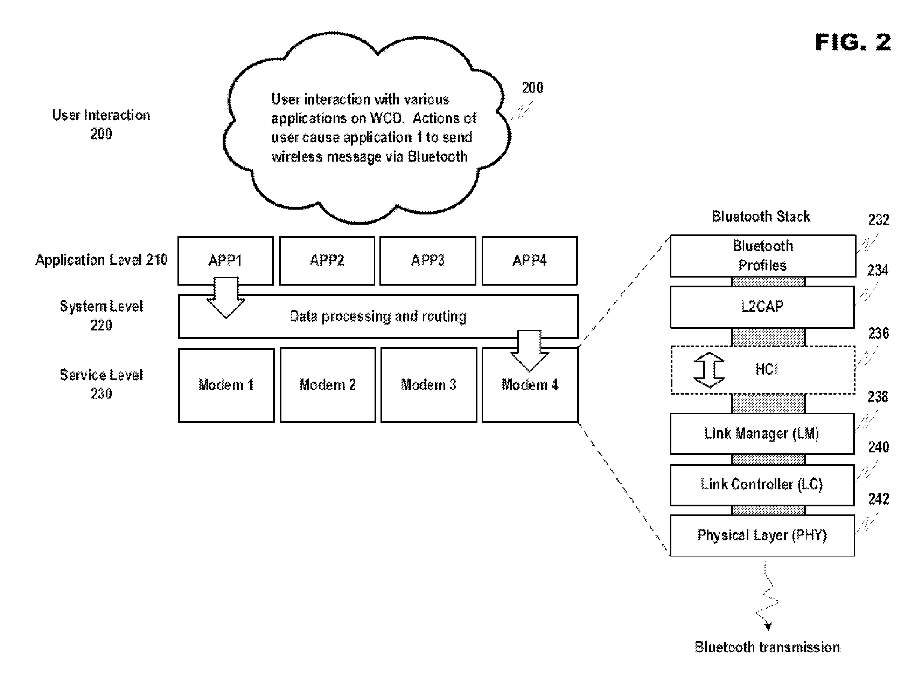

FIG. 2 discloses a stacked approach to understanding the operation of a WCD in accordance with at least one embodiment of the present invention. At the top level 200, users may interact with apparatuses. Interaction may involve, for example, users entering information via a user interface in order to activate functionality in application level 210. In the application level, programs related to specific functionality within apparatuses may interact with both the user and the system level. These programs may include various applications such as programs for conveying visual information (e.g., web browser, DVB-H receiver, etc.), audio information (e.g., cellular telephone, voice mail, conferencing software, DAB or analog radio receiver, etc.), recording information (e.g., digital photography software, word processing, scheduling, etc.) or other information processing. Actions initiated in application level 210 may require information to be transmitted from, or received into, the apparatus. In the FIG. 2 example, the transmission of data via Bluetooth™ communication is being requested, which may trigger a request for access to system level resources in order to initiate the required processing and routing of data.

System level 220 may process data requests and route the data for transmission. Processing may include, for example, calculation, translation, conversion and/or packetizing the data. Any resulting information may then be routed to an appropriate communication resource in the service level. If desired communication resources are active and available in service level 230, the packets may then be routed accordingly for delivery via wired or wireless transmission. In some instances there may be a plurality of wired and/or wireless communication modules that support one or more different communication transports. In the example of FIG. 2, radio modem 4 may be active and available to transmit packets via Bluetooth™ wireless communication. However, communication modules (as a hardware resource) need not be dedicated to specific transports, and thus, may be employed for different types of wired/wireless communication depending on the requirements of the transport and the hardware characteristics of the module.

In the particular example disclosed in FIG. 2, radio modem 4 may implement a series of protocol steps (e.g., depicted as a protocol stack) when transmitting/receiving using Bluetooth™. The protocol stack may include elements that convey information from the system level to the physical layer, from which it may be transmitted wirelessly to another device. At the upper-most level, Bluetooth™ Profiles 232 may include various types of definitions describing, for example, wireless communication configurations needed to access other apparatuses or standards profiles that applications may utilize when engaging in wireless communication via Bluetooth™. Bluetooth™ profiles for other apparatuses may be established through "pairing." Pairing is a process where apparatuses may participate in an initial polling/response interaction to exchange identification and connection information that may be saved in order to expedite reconnection at a later time. After applications and/or target apparatuses are established, any information to be sent must be prepared for transmission. L2CAP level 234 includes at least a logical link controller and adaptation protocol that support higher level protocol multiplexing packet segmentation and reassembly and the conveyance of quality of service (QoS) information. Information prepared by L2CAP level 234 may then be passed to application-optional host controller interface (HCI) 236. This layer may act as a command interface to lower link manager protocol (LMP) layers (e.g., link manager (LM) 238 and link controller (LC) 240). LM 238 may establish link setup, authentication, link configuration and other protocols related to establishing a wireless link between two or more apparatuses. LC 440 may also help to manage active links between apparatuses by handling low-level baseband protocols. Actual wireless interaction may then be conducted utilizing wireless hardware (modem, antenna, etc.) and corresponding support software associated with physical layer (PHY) 242. The Bluetooth™ protocol stack may also be utilized in an order reversed from that disclosed above in order to receive wireless transmissions.

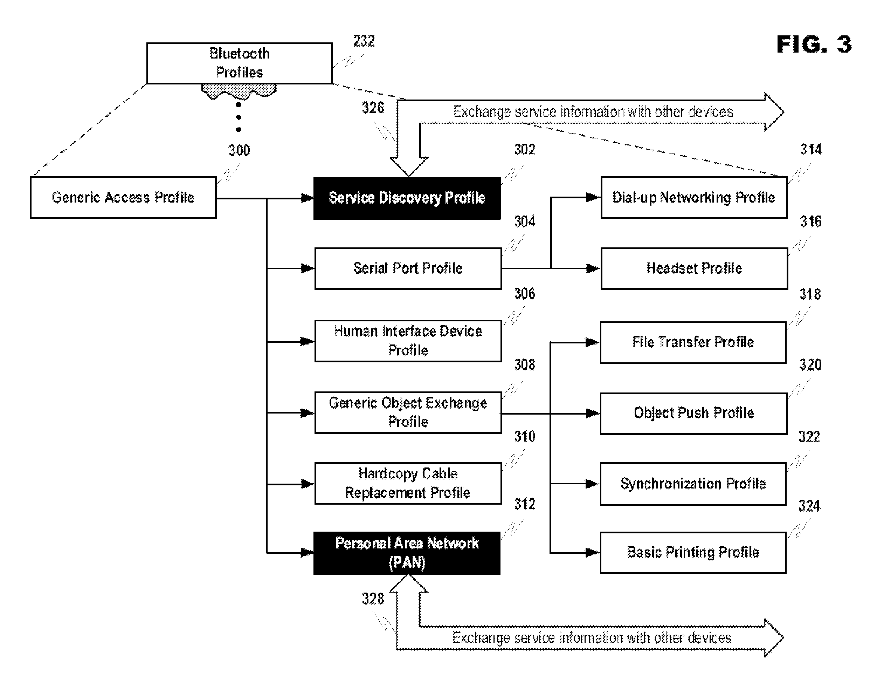

FIG. 3 discloses further detail regarding Bluetooth™ profiles layer 232. The profiles 300-324 define various standardized tasks that may be completed using Bluetooth™ communication. For example, developers may check these profiles in order to make sure that their application will interface correctly with the Bluetooth™. Profiles may be organized in a hierarchy, wherein each subsequent profile relies on the definitions in the profile from which it depends. General access profile (GAP) 300 provides the basis for all other profiles and defines a consistent means with which to establish a wireless link between apparatuses (e.g., apparatus requirements and procedures needed to establish links). Under GAP 300 exist basic profiles that may be used to execute transactions between apparatuses. Service discovery profile (SDP) 302 delineates how services can be identified in other apparatuses. Serial port profile (SPP) 304 defines how a virtual serial port may be established between apparatuses. Human interface device profile (HID) 306 defines how pointing devices and other user interface peripherals can wirelessly interact with an apparatus. Generic object exchange profile (GOEP) 308 is a general profile that controls the transfer of software objects between devices, and Hardcopy cable replacement profile (HCRP) 310 defines how driver-based printing is done over a wireless link. Personal Area Network (PAN) profile 312 can be used when configuring networks with other apparatuses, regardless of device type (e.g., mobile apparatus, access point, etc.). PAN Users can connect to either Network Access Points (NAP) or to already existing Ad-hoc networks.

Bluetooth™ Profiles 232 may have dependencies to other profiles. For example, dial-up networking profile (DUN) 314 and headset profile (HSP) 316 may depend on SPP 304. DUN 314 may be utilized for accessing the Internet using Bluetooth™, while HSP 316 controls how Bluetooth™-enabled headsets communicate with apparatuses. In a similar relationship, file transfer profile (FTP) 318, object push profile (OPP) 320, synchronization profile (SYNC) 322 and Basic Printing Profile (BPP) 324 may depend on GEOP 308. These profiles are all used to define specific instances where information is being transferred between apparatuses. Example information may include files, folders, calendar information, email information, virtual business cards and various other types of electronic data that may be pushed to, or pulled from, devices.

III. Service discovery

Apparatuses may contain various types of services. Some services are mainly intended to service requirements existing on the apparatus, while other services may be able to fulfill the requirements for consumers situated on other devices. Services may be employed, for example, in situations where data residing on one apparatus, such as multimedia data, is required on another apparatus. In this scenario many individual services may be accessed in order to support an interaction which appears relatively simple on its face. Such services may be tasked with establishing a wireless link, services for providing browsing functionality for stored information, services for conveying (e.g., streaming) the required information between apparatuses, etc.

However, available services must first be identified before they can be accessed. At least two profiles may be employed as a part of the identification process. SDP 302 may "discover" accessible services residing in other apparatuses by exchanging service information as shown at 326 in FIG. 3. One example of a discoverable service is PAN profile 312. After establishing a network with other devices using PAN profile 312, further discovery can be performed in order to find services in the network that were not identifiable by SDP 302 during the initial discovery (e.g., via further service information exchanges at 328). After identifying the services that are available, the linked apparatuses may access one or more of these services in performing activities including, for example, accessing data stored on other apparatuses, etc.

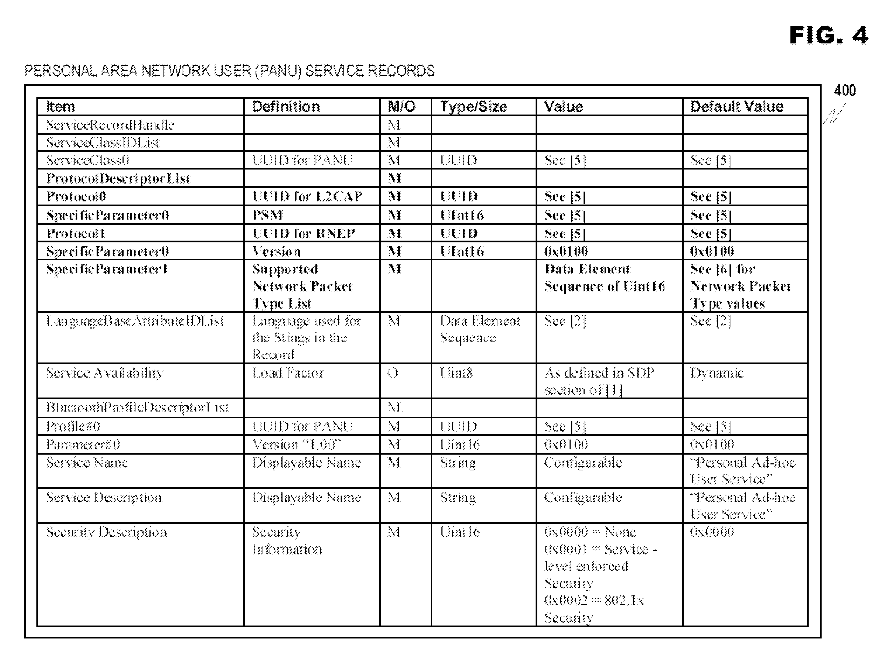

FIG. 4 discloses an example of a Personal Area Network User (PANU) Service record 400 for Bluetooth™. The format of service records are defined by the PAN profile in Bluetooth™, however, similar record constructs may also be employed for other communication transports. The attributes of service records such as 400 may be read during service discovery in order to determine service communication characteristics that are relevant to the communication transport currently in use such as service name, universally unique identifiers (UUID), version information, load factor information, security settings, and other communication parameters.

IV. Information in service records pertaining to complimentary transports

The previously described systems allow for the establishment of communication links between apparatuses in order to facilitate resource access. It is therefore inherent to this process that the transport utilized to initiate communication will be utilized for the duration of the transaction. However, such operational scenarios may prove detrimental where other useful resources may exist. For example, an initial connection may be established using a low power, and thus low throughput, wireless transport. Communication transports with such characteristics may be commonly employed since typical interaction is not expected to be very data-intensive.

However, given the abilities of multifunction apparatuses that are now available, if is foreseeable that information conveyance requirements may change substantially during the duration of a connection. For example, a user may desire to wirelessly browse and then stream multimedia information residing on a remote apparatus. Connection establishment, navigation to and browsing of stored data files may not involve the conveyance of substantial amounts of data, and thus, low-power/low-capacity transports may be appropriate for such activities. Selection of stored data (e.g., at least one multimedia file stored on the remote apparatus) may then trigger wireless transmission of the stored data to the user's device. Since data is being streamed (e.g., the transmitted multimedia information is being immediately consumed by a player application on the users' apparatus), not only will the amount of data being conveyed increase substantially, but the data transmission itself may become more error and speed sensitive. The initial low-power/low-capacity transport may become quickly overwhelmed, leading to poor overall QoS.

In view situations like the previously described communication scenario, it may be advantageous if visibility is provided with respect to available complimentary communication transports during the service discovery process. For example, switching from an initial wireless low-power/low-capacity transport to another wireless transport that is more robust (e.g., higher capacity, better error correction, etc.) may provide better QoS for transactions involving large amounts of data, as well as resource conservation due to the reduced need for retransmission.

In accordance with at least one example embodiment of the present invention, service records corresponding to an initial communication transport may comprise attributes containing identification and/or configuration information for complimentary communication transports that are available for use with the service. Attribute information may be utilized for customizing a communication link based on pending communication activities. For example, a determination of the most appropriate transport for performing pending communication activities may be based on the ability of the initial transport and any complimentary transports taken in view of the performance requirements dictated by the pending communication activities. For example, if the attribute for the Bluetooth™ IP Network printing service is:

*( ( L2CAP, PSM=RFCOMM), RFCOMM, CN=2, ( PPP ), ( IP ), ( TCP ), ( IPP ))*

Then example attributes for other communication transports (e.g., WLAN or Ethernet) in accordance with various example embodiments of the present invention may be:

*( ( 802.11 ), ( IP ), ( TCP )) − or − ( ( Ethernet ), ( IP ), ( TCP ))*

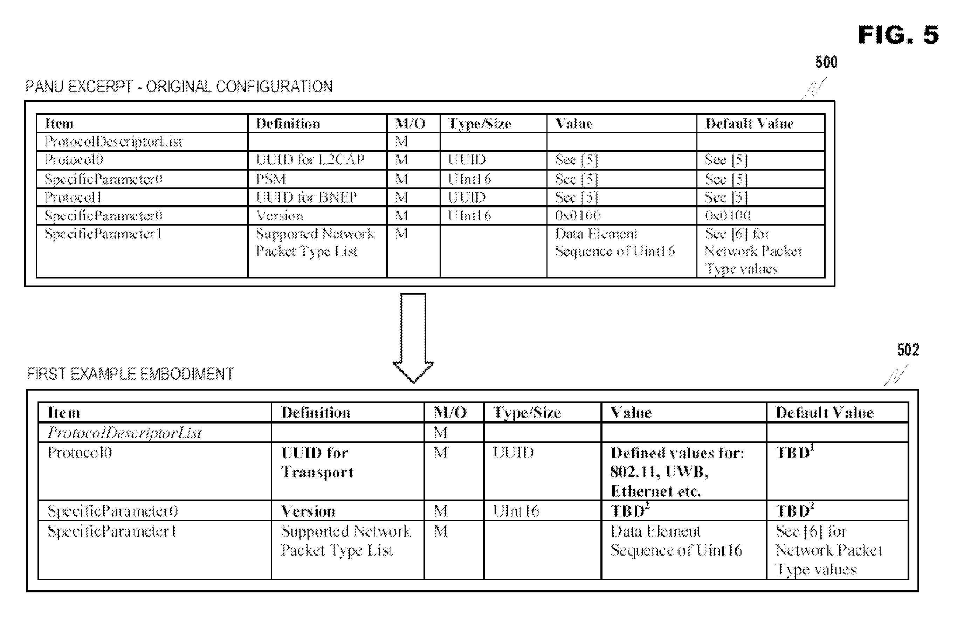

Generalized examples of complimentary communication transport attributes are shown in FIG. 5-7. In accordance with various example embodiments of the present invention, the example include relevant fields from the record structure of the existing Bluetooth™ PANU service record at 500 for comparison with three alternative attribute configurations shown at 502, 600 and 700. There can be one or more specific parameters that relate to each usable transport, but only one generic set parameter of attributes is shown in each of examples 502, 600 and 700.

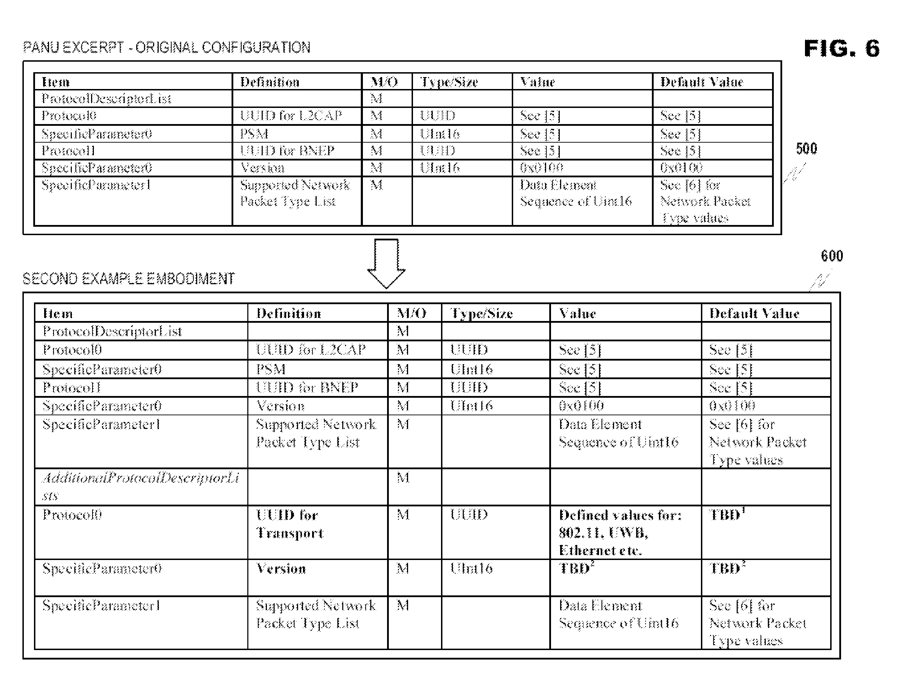

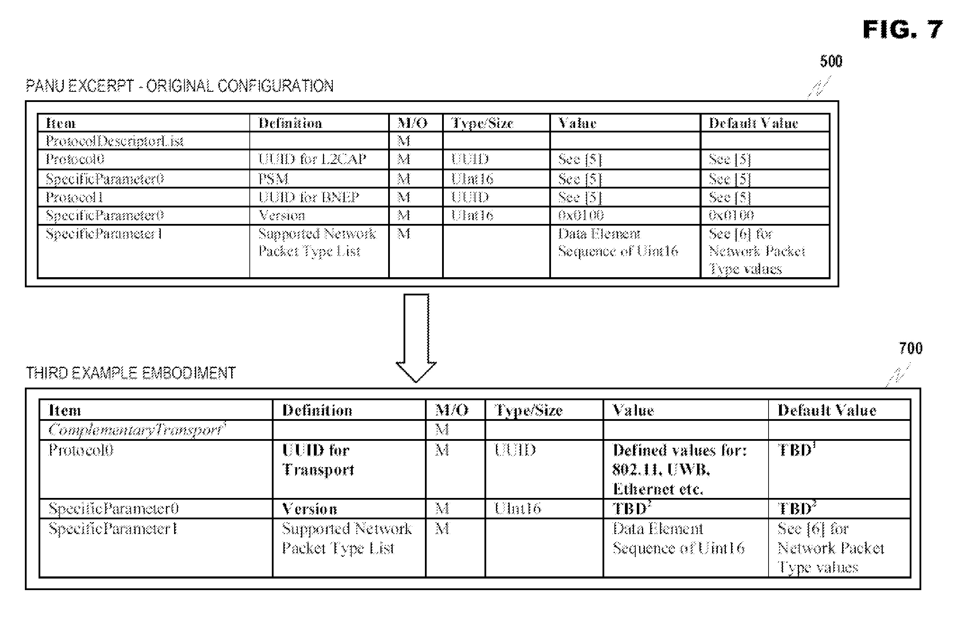

In the example of FIG. 5, new values pertaining to complementary transports may be defined by being included as new information in the existing attribute *ProtocolDescriptorList* as shown at 502. In the alternative implementation shown at 600 in FIG. 6, information regarding complementary transports may be included (e.g., defined and utilized) in a different attribute such as, for example, *AdditionalProtocolDescriptorLists.* This configuration may be able to maintain the existing *ProtocolDescriptorList* attribute structure while adding similar information corresponding to each additional supported transport under a different attribute. FIG. 7 discloses a third example attribute implementation at 700, wherein a new attribute (e.g., *ComplementaryTransports*) may be defined to indicate availability of complementary transports.

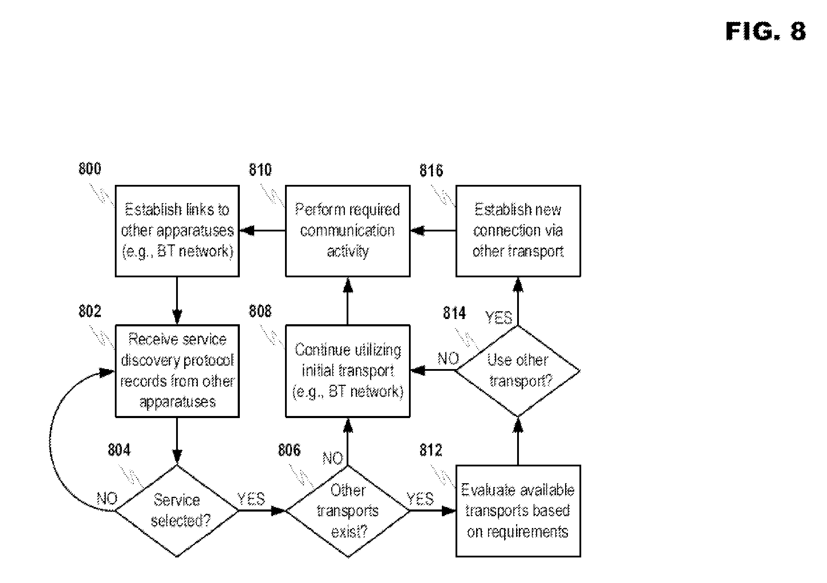

In accordance with at least one example embodiment of the present invention, a flowchart of a service discovery and/or access process is disclosed in FIG. 8. As previously set forth, this example process employs Bluetooth™ (BT) only for the sake of explanation, and thus, is not limited to being implemented using only this communication transport. In step 800 a link may be established between apparatuses. Link initialization may be triggered by a multitude of activities that occur in apparatuses, such as the activation of programs that require information residing on another apparatus, automated utilities that execute periodically, user interaction with an apparatus, etc. Part of the flow initiated in step 800 may include service discovery processes (SDP, step 802), wherein service discovery protocol records may be received from other devices. Service discovery protocol records may comprise attribute information corresponding to service functionality, characteristics and/or configuration. The discovery process may continue in steps 802-804 until at least one service is selected based on, for example, pending communication requirements such as query services, data streaming services, application-specific services, etc.

The service attributes that may be read in SDP steps 802-804 may further include the identification of complimentary transports that are usable with the service. This information may be organized in accordance with any of the previously described example implementations. A determination may then be made in step 806 as to whether any complimentary transports are available (e.g., if any other transports are identified in the received service discovery protocol records as usable with a service). If no complimentary transports are determined to be available in step 806, then the connection established using the initial transport (BT in this example) may continue to be used in step 808 to support subsequent communication activities in step 810. On the contrary, if complimentary transports are identified, the process may proceed to step 812 wherein all available transports (e.g., initial and complimentary) may be evaluated in view of pending communication activity requirements. Using one of the previous operational scenarios as an example, where the pending communication comprises presenting multimedia information that is streamed from a separate apparatus, the requirements for preferred communication transports may include high speed and/or data capacity including some level of error-correction.

The result of the evaluation in step 812 may be used in selecting communication transports to employ in step 814. Either the initial communication transport will continue to be utilized (in this example BT), which would cause the process to return to step 808, or at least one complimentary communication transport (e.g., one or more transports may be selected in cases where more than one complimentary transport is available and appropriate for use) may be selected. The process may then move to step 816 where a new link may be established using complimentary transports in order to perform the activities included in step 810. The process may then return to step 800 to await the next situation requiring inter-apparatus communication.

Accordingly, it will be apparent to persons skilled in the relevant art that various changes in form and detail can be made therein without departing from the spirit and scope of the invention. The breadth and scope of the present invention should not be limited by any of the above-described exemplary embodiments, but should be defined only in accordance with the following claims and their equivalents.

## Claims

1. A method, comprising:

   establishing a link to a remote apparatus using an initial transport;
   receiving at least one service discovery protocol record from the remote apparatus via the initial transport, wherein the at least one service discovery protocol record identifies services in the remote apparatus that are available via the initial transport and any complimentary transports that are also usable with each of the identified services;
   selecting at least one of the available services; and
   if any complimentary transports are identified in the at least one service discovery protocol record for the selected service, determining whether to use the initial transport or at least one of the complimentary transports when accessing the selected service.

2. A method according to claim 1, wherein the initial transport is Bluetooth and the complimentary transports comprise at least wireless local area networking.

3. A method according to claim 1 or claim 2, wherein the identification of any complimentary transports comprises one or more personal area network attributes defining at least one complementary transport that is usable with the selected service.

4. A method according to any of claims 1-3, wherein determining whether to use the initial transport or at least one of the complimentary transports comprises determining which transports are more appropriate for use based on planned activities to be conducted using the selected service.

5. A method according to any of claims 1-4, further comprising employing the initial transport when no complementary transports are identified.

6. A computer program comprising computer readable program code configured to cause performance of the method

of any of the preceding claims when said program is run on a computer.

7. The computer program product of claim 6, wherein the computer program is a computer program product comprising a computer-readable medium bearing computer program code embodied therein for use with a computer.

8. An apparatus, comprising:

   means for establishing a link to a remote apparatus using an initial transport;
   means for receiving at least one service discovery protocol record from the remote apparatus via the initial transport, wherein the at least one service discovery protocol record identifies services in the remote apparatus that are available via the initial transport and any complimentary transports that are also usable with each of the identified services;
   means for selecting at least one of the available services; and
   means for, if any complimentary transports are identified in the at least one service discovery protocol record for the selected service, determining whether to use the initial transport or at least one of the complimentary transports when accessing the selected service.

9. An apparatus according to claim 8, wherein the initial transport is Bluetooth and the complimentary transports comprise at least wireless local area networking.

10. An apparatus according to claim 8 or 9, wherein the identification of any complimentary transports comprises one or more personal area network attributes defining at least one complementary transport that is usable with the selected service.

11. An apparatus according to any of claims 8-10, wherein the means for determining whether to use the initial transport or at least one of the complimentary transports comprises means for determining which transports are more appropriate for use based on planned activities to be conducted using the selected service.

12. An apparatus according to any of claims 8-11, further comprising means for employing the initial transport when no complementary transports are identified.

FIG. 1

Interfaces
106

Processor
102

Memory
104

Code

Data

Other modules
108

100

142

144

140

AP

146

114

110

112

116

INTERNET

120

130

**FIG. 2**

User Interaction
200

> User interaction with various applications on WCD. Actions of user cause application 1 to send wireless message via Bluetooth

200

Bluetooth Stack    232

| Application Level 210 | APP1 | APP2 | APP3 | APP4 |
|---|---|---|---|---|

Bluetooth Profiles    234

| System Level 220 | Data processing and routing |
|---|---|

L2CAP    236

HCI    238

| Service Level 230 | Modem 1 | Modem 2 | Modem 3 | Modem 4 |
|---|---|---|---|---|

Link Manager (LM)    240

Link Controller (LC)    242

Physical Layer (PHY)

Bluetooth transmission

EP 2 244 442 A1

**FIG. 3**

Bluetooth Profiles — 232

Generic Access Profile — 300

326 → Exchange service information with other devices

Service Discovery Profile — 302

Serial Port Profile — 304

Human Interface Device Profile — 306

Generic Object Exchange Profile — 308

Hardcopy Cable Replacement Profile — 310

Personal Area Network (PAN) — 312

Dial-up Networking Profile — 314

Headset Profile — 316

File Transfer Profile — 318

Object Push Profile — 320

Synchronization Profile — 322

Basic Printing Profile — 324

328 → Exchange service information with other devices

EP 2 244 442 A1

# FIG. 4

PERSONAL AREA NETWORK USER (PANU) SERVICE RECORDS

400

| Item | Definition | M/O | Type/Size | Value | Default Value |
|---|---|---|---|---|---|
| ServiceRecordHandle | | M | | | |
| ServiceClassIDList | | M | | | |
| ServiceClass0 | UUID for PANU | M | UUID | See [5] | See [5] |
| ProtocolDescriptorList | | M | | | |
| Protocol0 | UUID for L2CAP | M | UUID | See [5] | See [5] |
| SpecificParameter0 | PSM | M | Uint16 | See [5] | See [5] |
| Protocol1 | UUID for BNEP | M | UUID | See [5] | See [5] |
| SpecificParameter0 | Version | M | Uint16 | 0x0100 | 0x0100 |
| SpecificParameter1 | Supported Network Packet Type List | M | | Data Element Sequence of Uint16 | See [6] for Network Packet Type values |
| LanguageBaseAttributeIDList | Language used for the Stings in the Record | M | Data Element Sequence | See [2] | See [2] |
| Service Availability | Load Factor | O | Uint8 | As defined in SDP section of [1] | Dynamic |
| BluetoothProfileDescriptorList | | M | | | |
| Profile#0 | UUID for PANU | M | UUID | See [5] | See [5] |
| Parameter#0 | Version "1.00" | M | Uint16 | 0x0100 | 0x0100 |
| Service Name | Displayable Name | M | String | Configurable | "Personal Ad-hoc User Service" |
| Service Description | Displayable Name | M | String | Configurable | "Personal Ad-hoc User Service" |
| Security Description | Security Information | M | Uint16 | 0x0000 = None 0x0001 = Service - level enforced Security 0x0002 = 802.1x Security | 0x0000 |

## FIG. 5

PANU EXCERPT - ORIGINAL CONFIGURATION

500

| Item | Definition | M/O | Type/Size | Value | Default Value |
|---|---|---|---|---|---|
| ProtocolDescriptorList | | M | | | |
| Protocol0 | UUID for L2CAP | M | UUID | See [5] | See [5] |
| SpecificParameter0 | PSM | M | UInt16 | See [5] | See [5] |
| Protocol1 | UUID for BNEP | M | UUID | See [5] | See [5] |
| SpecificParameter0 | Version | M | UInt16 | 0x0100 | 0x0100 |
| SpecificParameter1 | Supported Network Packet Type List | M | | Data Element Sequence of Uint16 | See [6] for Network Packet Type values |

FIRST EXAMPLE EMBODIMENT

502

| Item | Definition | M/O | Type/Size | Value | Default Value |
|---|---|---|---|---|---|
| *ProtocolDescriptorList* | | M | | | |
| Protocol0 | **UUID for Transport** | M | UUID | **Defined values for: 802.11, UWB, Ethernet etc.** | **TBD**[1] |
| SpecificParameter0 | **Version** | M | UInt16 | **TBD**[2] | **TBD**[2] |
| SpecificParameter1 | Supported Network Packet Type List | M | | Data Element Sequence of Uint16 | See [6] for Network Packet Type values |

EP 2 244 442 A1

PANU EXCERPT - ORIGINAL CONFIGURATION

**FIG. 6**

| Item | Definition | M/O | Type/Size | Value | Default Value |
|------|-----------|-----|-----------|-------|---------------|
| ProtocolDescriptorList | | M | | | |
| Protocol0 | UUID for L2CAP | M | UUID | See [5] | See [5] |
| SpecificParameter0 | PSM | M | Uint16 | See [5] | See [5] |
| Protocol1 | UUID for BNEP | M | UUID | See [5] | See [5] |
| SpecificParameter0 | Version | M | Uint16 | 0x0100 | 0x0100 |
| SpecificParameter1 | Supported Network Packet Type List | M | | Data Element Sequence of Uint16 | See [6] for Network Packet Type values |

500

600

SECOND EXAMPLE EMBODIMENT

| Item | Definition | M/O | Type/Size | Value | Default Value |
|------|-----------|-----|-----------|-------|---------------|
| ProtocolDescriptorList | | M | | | |
| Protocol0 | UUID for L2CAP | M | UUID | See [5] | See [5] |
| SpecificParameter0 | PSM | M | Uint16 | See [5] | See [5] |
| Protocol1 | UUID for BNEP | M | UUID | See [5] | See [5] |
| SpecificParameter0 | Version | M | Uint16 | 0x0100 | 0x0100 |
| SpecificParameter1 | Supported Network Packet Type List | M | | Data Element Sequence of Uint16 | See [6] for Network Packet Type values |
| *AdditionalProtocolDescriptorLists* | | M | | | |
| Protocol0 | **UUID for Transport** | M | UUID | **Defined values for: 802.11, UWB, Ethernet etc.** | TBD[1] |
| SpecificParameter0 | **Version** | M | Uint16 | TBD[2] | TBD[2] |
| SpecificParameter1 | Supported Network Packet Type List | M | | Data Element Sequence of Uint16 | See [6] for Network Packet Type values |

EP 2 244 442 A1

**FIG. 7**

PANU EXCERPT - ORIGINAL CONFIGURATION          500

| Item | Definition | M/O | Type/Size | Value | Default Value |
|---|---|---|---|---|---|
| ProtocolDescriptorList | | M | | | |
| Protocol0 | UUID for L2CAP | M | UUID | See [5] | See [5] |
| SpecificParameter0 | PSM | M | Uint16 | See [5] | See [5] |
| Protocol1 | UUID for BNEP | M | UUID | See [5] | See [5] |
| SpecificParameter0 | Version | M | Uint16 | 0x0100 | 0x0100 |
| SpecificParameter1 | Supported Network Packet Type List | M | | Data Element Sequence of Uint16 | See [6] for Network Packet Type values |

THIRD EXAMPLE EMBODIMENT          700

| Item | Definition | M/O | Type/Size | Value | Default Value |
|---|---|---|---|---|---|
| *ComplementaryTransport*[1] | | M | | | |
| Protocol0 | **UUID for Transport** | M | UUID | **Defined values for: 802.11, UWB, Ethernet etc.** | **TBD**[1] |
| SpecificParameter0 | **Version** | M | Uint16 | **TBD**[2] | **TBD**[2] |
| SpecificParameter1 | Supported Network Packet Type List | M | | Data Element Sequence of Uint16 | See [6] for Network Packet Type values |

EP 2 244 442 A1

**FIG. 8**

EP 2 244 442 A1

800 — Establish links to other apparatuses (e.g., BT network)

810 — Perform required communication activity

816 — Establish new connection via other transport

802 — Receive service discovery protocol records from other apparatuses

808 — Continue utilizing initial transport (e.g., BT network)

814 — Use other transport? (YES / NO)

804 — Service selected? (NO / YES)

806 — Other transports exist? (NO / YES)

812 — Evaluate available transports based on requirements

Europäisches
Patentamt

European
Patent Office

Office européen
des brevets

**EUROPEAN SEARCH REPORT**

Application Number

EP 10 15 7165

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/286478 A1 (MELA MARTTI [FI] ET AL) 29 December 2005 (2005-12-29) * figures 1, 2 * * paragraph [0004] - paragraph [0010] * * paragraph [0021] - paragraph [0030] * ----- | 1-12 | INV. H04L29/08 ADD. H04L29/06 |
| A | WO 2008/145808 A1 (NOKIA CORP [FI]; PALIN ARTO [FI]; ERIKSSON TIMO [FI]; JANTUNEN JONI [F) 4 December 2008 (2008-12-04) * page 1 - page 3 * * page 6 - page 12 * * page 14 - page 16 * * figures 1-7, 12 * ----- | 1-12 | |

TECHNICAL FIELDS
SEARCHED (IPC)

H04L

The present search report has been drawn up for all claims

| Place of search | Date of completion of the search | Examiner |
|---|---|---|
| Munich | 6 August 2010 | Riegler, Jörg |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 10 15 7165

This annex lists the patent family members relating to the patent documents cited in the above-mentioned European search report.
The members are as contained in the European Patent Office EDP file on
The European Patent Office is in no way liable for these particulars which are merely given for the purpose of information.

06-08-2010

| Patent document cited in search report | Publication date | Patent family member(s) | Publication date |
|---|---|---|---|
| US 2005286478 A1 | 29-12-2005 | NONE | |
| WO 2008145808 A1 | 04-12-2008 | US 2008301301 A1 | 04-12-2008 |

EPO FORM P0459

For more details about this annex : see Official Journal of the European Patent Office, No. 12/82